# EUROPEAN PATENT APPLICATION

(11) **EP 2 933 873 A1**
(43) Date of publication of application: **21.10.2015**
(21) Application number: 15163489.6
(22) Date of filing: 14.04.2015
(51) Int. Cl.: H01M 10/653, H01M 10/654, H01M 10/655

(54) **RECHARGEABLE BATTERY AND RECHARGEABLE BATTERY PACK**

(30) Priority: 15.04.2014 KR 20140044982
(71) Applicant: Samsung SDI Co., Ltd., Gyeonggi-do 446-902 (KR)
(72) Inventor: Ahn, Gi-Jang, 446-902 Yongin-si, Gyeonggi-do (KR); Cheong, Kyeong-Beom, 446-902 Yongin-si, Gyeonggi-do (KR)
(74) Representative: Gulde & Partner

(57) **Abstract**

A rechargeable battery includes an electrode assembly to charge and discharge current, a case accommodating the electrode assembly, a cap plate coupled the case, electrode terminals on the cap plate, the electrode terminals being electrically connected to the electrode assembly, and a thermal pad between a bottom of the case and the electrode assembly.

## Description

### BACKGROUND

### 1. Field

Embodiments generally to a rechargeable battery and a rechargeable battery pack.

### 2. Description of the Related Art

A rechargeable battery may be recharged and discharged repeatedly unlike a primary battery. Low capacity rechargeable batteries may be used in small, portable electronic devices, e.g., mobile phones, laptop computers, and camcorders, and large capacity rechargeable batteries may be used as power sources for driving motors, e.g., of hybrid vehicles and the like.

Rechargeable batteries may be used as unit battery cells for a small electronic device or in the form of a pack of a plurality of unit battery cells electrically connected for driving a motor.

### SUMMARY

Embodiments are directed to a rechargeable battery, including an electrode assembly to charge and discharge current, a case accommodating the electrode assembly, a cap plate coupled to the case, electrode terminals on the cap plate, the electrode terminals being electrically connected to the electrode assembly, and a thermal pad between a bottom of the case and the electrode assembly.

The thermal pad may include a pouch corresponding in size to the bottom of the case and thermal grease contained in the pouch.

One surface of the thermal pad may be in contact with the bottom of the case. Another surface of the thermal pad may be in contact with the electrode assembly.

The area of the thermal pad may be equal to the bottom area of the case and greater than the area of the electrode assembly facing the bottom of the case.

The pouch may include thermal conductive material.

The pouch may be deformed according to a shape of a space defined between the electrode assembly and the bottom of the case.

Embodiments are also directed to a rechargeable battery pack including a plurality of unit battery cells, each including a case, an electrode assembly inside the case, and a thermal pad between a bottom of the case and the electrode assembly, bus bars that electrically connect electrode terminals of the unit battery cells, and a cooling unit in contact with the case of each of the unit battery cells.

The cooling unit may be located under the unit battery cells and may come into contact with an outer surface of the bottom of the each case.

The cooling unit may include a housing in contact with the outer surface of a bottom of each case, cell barriers within the housing, the cell barriers forming a path to direct a heat transfer medium to flow, and a circulation pump that circulates the heat transfer medium through the path between an inlet and outlet of the housing.

The cell barriers extend along a second direction crossing a first direction of the unit battery cells, the first direction being a direction between the electrode terminals of a single unit battery cell of the unit battery cells.

The cell barriers may be spaced apart from each other along the first direction, and ends of the cell barriers along the second direction may be connected to respective opposite inner walls of the housing in an alternating fashion.

The circulation pump may be located outside the housing.

### BRIEF DESCRIPTION OF THE DRAWINGS

Features will become apparent to those of skill in the art by describing in detail exemplary embodiments with reference to the attached drawings in which:
FIG. 1 illustrates a perspective view of a rechargeable battery according to an exemplary embodiment.
FIG. 2 illustrates a cross-sectional view taken along the line II-II of FIG. 1.
FIG. 3 illustrates an exploded perspective view of a thermal pad located under an electrode assembly.
FIG. 4 illustrates a perspective view of a rechargeable battery pack according to an exemplary embodiment.
FIG. 5 illustrates a cross-sectional view taken along the line V-V of FIG. 4.
FIG. 6 illustrates a cross-sectional view taken along the line VI-VI of FIG. 5.
FIG. 7 illustrates a graph showing the relationship between operation time and the temperature of the electrode assembly of a rechargeable battery pack according to an exemplary embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

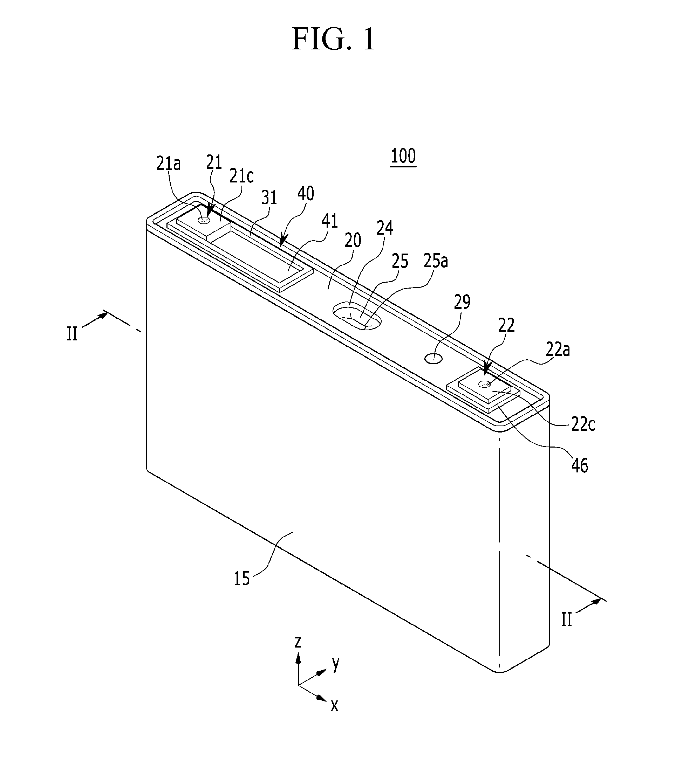

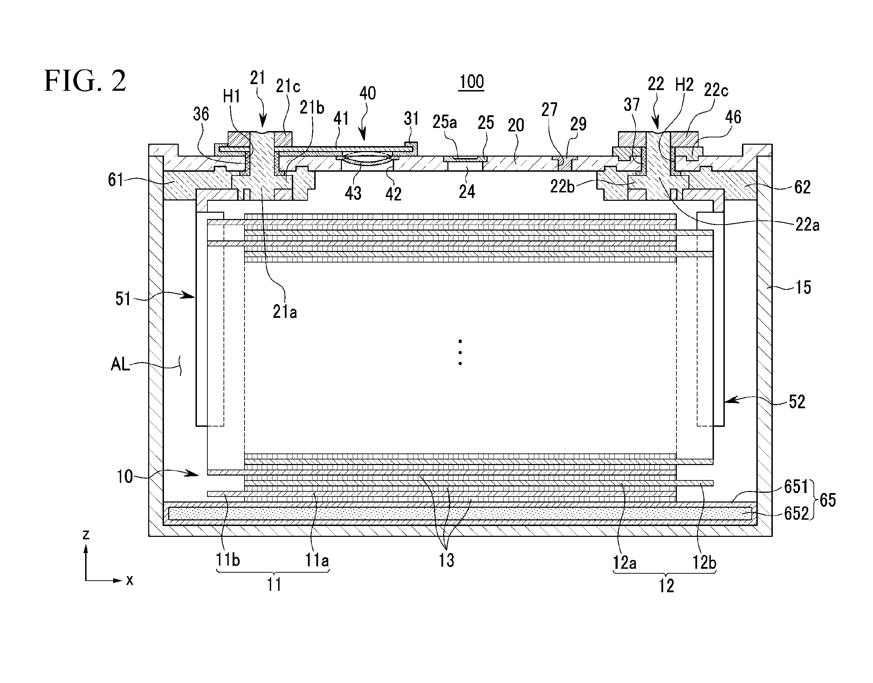

FIG. 1 illustrates a perspective view of a rechargeable battery according to one exemplary embodiment. FIG. 2 illustrates a cross-sectional view taken along the line II-II of FIG. 1.

Referring to FIG. 1 and FIG. 2, a rechargeable battery 100 according to an exemplary embodiment includes an electrode assembly 10 for charging and discharging current, a case 15 accommodating the electrode assembly 10, a cap plate 20 coupled to the opening of the case 15, electrode terminals (e.g., a negative terminal 21 and an positive terminal 22) installed on the cap plate 20 and electrically connected to the electrode assembly 10, and a thermal pad 65 provided between the bottom of the case 15 and the electrode assembly 10.

For example, the electrode assembly 10 may be formed by locating a negative electrode 11 and a positive electrode 12 on respective sides of a separator 13, which is an insulator, and winding the negative electrode 11, the separator 13, and the positive electrode 12 in a jelly roll configuration.

The negative electrode 11 and the positive electrode 12 may include coated regions 11a and 12a that are formed by applying an active material onto a metal plate, and uncoated regions 11b and 12b on which the active material is not applied.

The uncoated region 11b of the negative electrode 11 may be formed at an end of the negative electrode 11 along the wound negative electrode 11. The uncoated region 12b of the positive electrode 12 is formed at an end of the positive electrode 12 along the wound positive electrode 12. The uncoated regions 11b and 12b of the negative and positive electrodes 11 and 12b may be located at respective ends of the electrode assembly 10.

For example, the case 15 may be formed to be cuboidal so as to provide a space for receiving the electrode assembly 10 and an electrolyte solution. The case 15 may include an opening for communicating the outside and the inner space on one side of the cuboid. The opening may allow the electrode assembly 10 to be inserted inside the case 15.

The cap plate 20 may be installed in the opening of the case 15 to close and seal the case 15. For example, the case 15 and the cap plate 20 may be be made of aluminum and may be welded to each other.

The cap plate 20 may include an electrolyte injection opening 27, a vent hole 24, and terminal holes H1 and H2. The electrolyte injection opening 27 may place the outside of the cap plate 20 and the inside of the case 15 in fluid communication to allow the electrolyte solution to be injected into the case 15. After the electrolyte solution is injected, the electrolyte injection opening 27 may be sealed with a sealing cap 29.

The vent hole 24 may be closed and sealed by a vent plate 25 so as to discharge an internal pressure of a rechargeable battery. When the internal pressure of the rechargeable battery 100 reaches a predetermined pressure, the vent plate 25 may be incised to open the vent hole 24. The vent plate 25 may include a notch 25a for generating an incision.

The negative terminal 21 and the positive terminal 22 may be installed in the terminal holes H1 and H2 of the cap plate 20 and may be electrically connected to the electrode assembly 10. The negative terminal 21 may be electrically connected to the negative electrode 11 of the electrode assembly 10, and the positive terminal 22 may be electrically connected to the positive electrode 12 of the electrode assembly 10. Therefore, the electrode assembly 10 may be drawn out of the case 15 through the negative terminal 21 and the positive terminal 22.

The negative terminal 21 and the positive terminal 22 may have the same configuration inside the cap plate 20, and may have different configurations outside the cap plate 20, which will now be described.

The negative and positive terminals 21 and 22 may include rivet terminals 21a and 22a installed in the terminal holes H1 and H2 of the cap plate 20, flanges 21b and 22b widely formed as a single body on the rivet terminals 21a and 22a inside the cap plate 20, and plate terminals 21c and 22c located outside the cap plate 20 and connected to the rivet terminals 21a and 22a through riveting or welding.

Negative and positive gaskets 36 and 37 may be installed between the rivet terminals 21a and 22a of the negative and positive terminals 21 and 22 and the inner surfaces of the terminal holes H1 and H2 of the cap plate 20 to seal and electrically insulate a space between the rivet terminals 21a and 22a of the negative and positive terminals 21 and 22 and the cap plate 20.

The negative and positive gaskets 36 and 37 may be installed to further extend between the flanges 21b and 22b and the inner surface of the cap plate 20 to further seal and electrically insulate the space between the flanges 21b and 22b and the cap plate 20. The negative and positive gaskets 36 and 37 may prevent an electrolyte solution from being leaked through the terminal holes H1 and H2 when installing the negative and positive terminals 21 and 22 in the cap plate 20.

Negative and positive lead tabs 51 and 52 may electrically connect the negative and positive terminals 21 and 22 to the negative and positive electrodes 11 and 12 of the electrode assembly 10. The negative and positive lead tabs 51 and 52 may be coupled to the bottoms of the rivet terminals 21a and 22a. The bottoms of the rivet terminals 21a and 22a may be caulked such that the negative and positive electrode lead tabs 51 and 52 are supported by the flanges 21b and 22b and connected to the rivet terminals 21a and 22a.

Negative and positive insulation members 61 and 62 may be installed between the negative and positive electrode lead tabs 51 and 52 and the cap plate 20 to electrically insulate the negative and positive electrode lead tabs 51 and 52 from the cap plate 20. The negative and positive electrode insulating members 61 and 62 may be coupled to the cap plate 20 on one side of the negative and positive electrode insulating members 61 and 62 and may wrap the negative and positive electrode lead tabs 51 and 52, the rivet terminals 21a and 22a, and the flanges 21b and 22b on the other side, thereby stabilizing their connection structure.

The rechargeable battery 100 may further include an external short-circuit unit 40 located on the side including the negative terminal 21. The external short-circuit unit 40 will now be described with regard to a plate terminal 21c of the negative terminal 21, and a top plate 46 will now be described with regard to a plate terminal 22c of the positive terminal 22.

The external short-circuit unit 40 of the negative terminal 21 may include a short-circuit tab 41 and a short-circuit member 43 that are separated or short-circuited according to an internal pressure. The short-circuit tab 41 may be electrically connected to the rivet terminal 21a of the negative terminal 21, and may be located on the outer side of the cap plate 20, with an insulation member 31 interposed between them.

The insulation member 31 may be installed between the short-circuit tab 41 and the cap plate 20 to electrically insulate the short-circuit tab 41 and the cap plate 20. The cap plate 20 may maintain electrical insulation from the negative terminal 21.

The short-circuit tab 41 and the plate terminal 21c may be coupled to an upper portion of the rivet terminal 21a to caulk the upper portion such that the short-circuit tab 41 and the plate terminal 21c are coupled to the upper portion of the rivet terminal 21a. The short-circuit tab 41 and the plate terminal 21c may be fixed to the cap plate 20, with the insulation member 31 interposed between them.

The short-circuit member 43 may be installed in a short-circuit hole 42 formed in the cap plate 20. The short-circuit tab 41 may be connected to the negative terminal 21 and may extend along the outer side of the short-circuit member 43. The short-circuit tab 41 and the short-circuit member 43 may correspond to the short-circuit hole 42, and may be kept separated (as indicated by solid line in FIG. 2) facing each other. The short-circuit tab 41 and the short-circuit member 43 may form a short-circuit state (as indicated by the imaginary line in FIG. 2) by inversion of the short-circuit member 43 when the internal pressure of a unit battery cell 100 is increased.

The top plate 46 located on the side including the positive terminal 22 may electrically connect the plate terminal 22c of the positive terminal 22 and the cap plate 20. For example, the top plate 46 may be interposed between the plate terminal 22c and the cap plate 20, and the rivet terminal 22a may penetrate the top plate 46.

The top plate 46 and the plate terminal 22c may be coupled to an upper portion of the rivet terminal 22a to caulk the upper portion such that the top plate 46 and the plate terminal 22c are coupled to the upper portion of the rivet terminal 22a. The plate terminal 22c may be installed on the outer side of the cap plate 20, with the top plate 46 interposed between them.

The positive gasket 37 may be installed to further extend between the rivet terminal 22a and the top plate 46. The positive gasket 37 may prevents the rivet terminal 22a and the top plate 46 from being electrically connected to each other. The rivet terminal 22a may be electrically connected to the top plate 46 through the plate terminal 22c.

The electrode assembly 10 accommodated in the case 15 may be tightly attached (not shown) to two planes (x-z planes) of the case 15 along the y axis and may be separated from inner walls (y-z planes) of the case 15 along the x axis, such that an air layer AL is formed between the electrode assembly 10 and the inner walls (y-z planes) of the case 15 (see FIG. 2).

When the rechargeable battery 100 is operated, heat generated from the electrode assembly 10 may be smoothly transferred through the two planes (x-z planes) of the case 15 to which the electrode assembly 10 is attached along the y axis, but may hardly be transferred to two inner walls (y-z planes) of the case 15 from which the electrode assembly 10 is separated along the x axis and to the bottom of the case 15 from which the electrode assembly 10 is separated along the z-axis, as shown in FIG. 2.

The thermal pad 65 may be configured to transfer the heat generated from the electrode assembly 10 in the rechargeable battery 100 more quickly to the bottom of the case 15 along the z-axis. For example, the thermal pad 65 may include a pouch 651 corresponding to the bottom of the case 15 and thermal grease 652, i.e., a thermal conductive material, contained in the pouch 651.

One surface of the thermal pad 65 may be in contact with the bottom of the case 15 and the other surface may be in contact with the electrode assembly 10 such that the thermal pad 65 may quickly transfer the heat generated from the electrode assembly 10 to the bottom of the case 15.

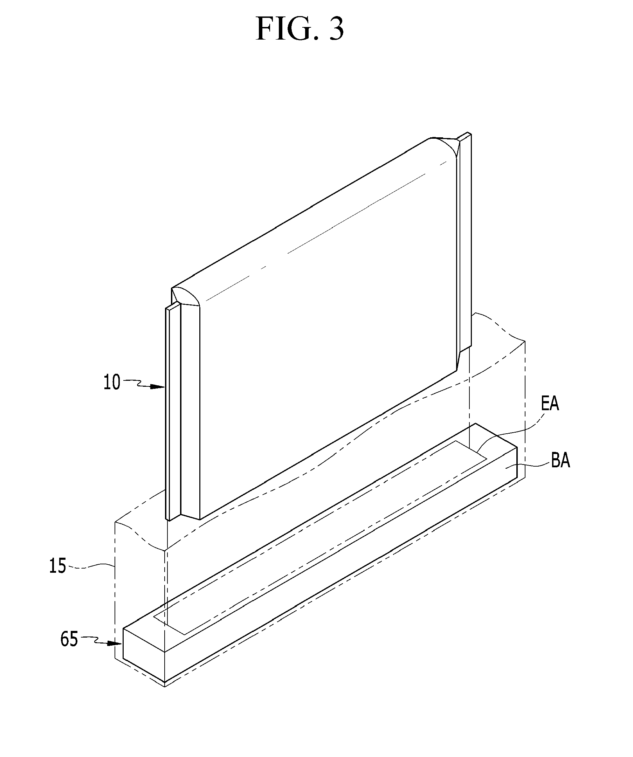

FIG. 3 illustrates an exploded perspective view of the thermal pad 65 located under the electrode assembly 10. Referring to FIG. 3, the area of the thermal pad 65 in a plane parallel to the bottom of the case may be equal to the bottom area BA of the bottom inside of the case 15 and may be greater than the area EA of the electrode assembly 10 facing the bottom of the case 15.

The thermal pad 65 may cover the entire inside bottom surface of the case 15 and may support the entire area EA of the electrode assembly 10 facing the bottom of the case 15. The thermal pad 65 may absorb heat from the entire area EA of the electrode assembly 10 facing the bottom of the case 15 and may transfer the heat to the entire bottom area BA of the case 15, which is greater than the area EA of the electrode assembly 10 facing the bottom of the case 15.

The pouch 651 containing the thermal grease 652 may be put into the case 15. The upper surface of the pouch 651 may be in contact with the lower surface of the electrode assembly 10, and the lower surface of the pouch 651 may be in contact with the bottom of the case 15.

The heat generated from the electrode assembly 10 may be transferred to the upper surface of the pouch 651, may sequentially pass through the thermal grease 652 and the lower surface of the pouch 651, and then may be transferred to the bottom of the case 15.

When such heat transfer is done, the thermal pad 65 may expand the heat passage extending from the electrode assembly 10 to the bottom of the case 15, thereby improving heat transfer and release performance.

The pouch 651 may contain the thermal grease 652 or a thermal conductive material Accordingly, the pouch may prevent the thermal grease 652 or the thermal conductive material from being directly exposed to and reacting with the electrolyte solution. Performance degradation of the electrolyte solution may be prevented.

The thermal grease 652 or the thermal conductive material may have a higher thermal conductivity than air and may be formed of soft material. The pouch 651 may also be made of flexible material. The pouch 651 and the thermal pad 65 may be deformed according to the shape of the space defined between the electrode assembly 10 and the bottom of the case 15, thereby coming into contact with and supporting the electrode assembly 10

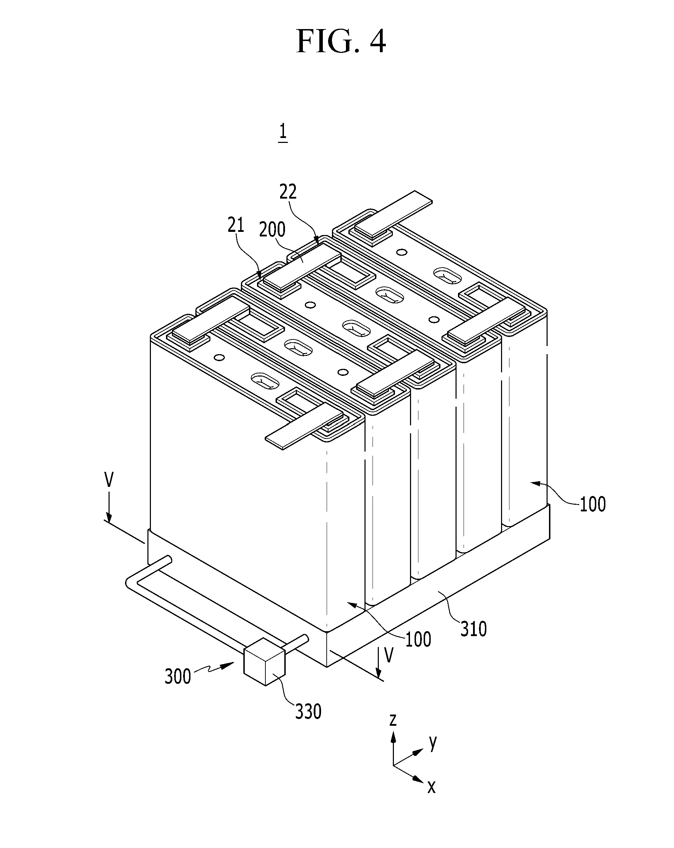

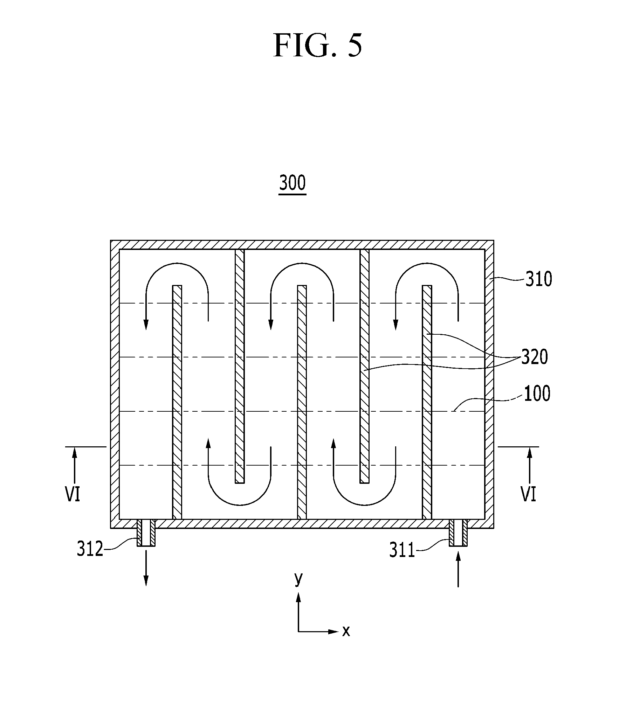

FIG. 4 illustrates a perspective view of a rechargeable battery pack according to an exemplary embodiment. FIG. 5 illustrates a cross-sectional view taken along the line V-V of FIG. 4.

Referring to FIG. 4 and FIG. 5, a rechargeable battery pack 1 may include unit battery cells 100 (denoted by the same reference numeral for convenience) serving as rechargeable batteries 100, bus bars 200 electrically connecting the electrode terminals (negative and positive terminals 21 and 22) of the unit battery cells 100, and a cooling unit in contact with the case 15 of the unit battery cells 100.

The rechargeable battery pack 1 of FIG. 4 may be formed by connecting the negative and positive terminals 21 and 22 of the unit battery cells 100 in series by the bus bars 200. In other implementations, the rechargeable battery pack may be formed by connecting the unit battery cells in parallel using the bus bars.

The cooling unit 300 may be located under the unit battery cells 100 to come into contact with the outer surface of the bottom of the case 15 of each of the unit battery cells 100, thereby releasing the heat transferred from the unit battery cells 100.

The cooling unit 300 may include a housing 310 in contact with the outer surface of the bottom of each case 15, cell barriers 320 forming a path P within the housing 310, and a circulation pump 330 to circulate a heat transfer medium through the path P. In one example, the heat transfer medium may be cooling water.

The housing 310 may include an inlet 311 and an outlet 312 on sides of the cooling unit to let the heat transfer medium in and out. The housing 310 may be made of a thin plate so as to be in contact with the entire lower surfaces of a prescribed number (for example, 5 of FIG. 4) of unit battery cells 100.

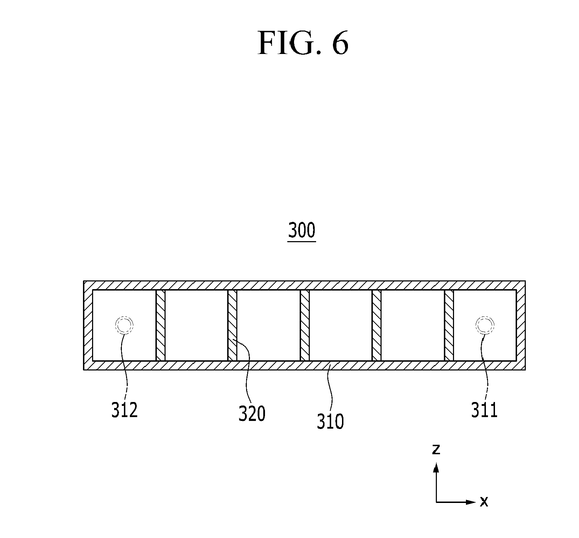

FIG. 6 illustrates a cross-sectional view taken along the line VI-VI of FIG. 5. Referring to FIG. 6, the cell barriers 320 may be formed along the entire height of the housing 310 (along the z axis) and may form the path P within the housing 310 to direct the heat transfer medium to flow.

The cell barriers 320 may be located within the housing 310, extending along a second direction (y-axis direction) crossing a first direction (x-axis direction) of the unit battery cells 100, the first direction being a direction between the negative terminal 21 and the positive terminal 22 of a unit cell 100. The circulation of the heat transfer medium may help minimize the temperature deviation of the unit battery cells 100.

A plurality of cell barriers 320 may be separated from each other along the first direction (x-axis direction), and either one of both ends of the cell barriers 320 along the second direction (y-axis direction) may be connected to the inner walls of the housing 310 in an alternating fashion. For example, ends of the cell barriers may be connected to respective opposite inner walls of the housing in an alternating fashion such that the path P is continuous within the housing 310 in a zigzag configuration to connect the inlet 311 and the outlet 312.

The circulation pump 330 may be located outside the housing 310. The circulation pump 330 may operate in conjunction with the inlet 311 and the outlet 312, thereby circulating the heat transfer medium through the path P in the housing 310. A low-temperature heat transfer medium may be let in through the inlet 311, circulated through the path P, and let out through the outlet 312 to transfer heat from the top of the housing 310 in contact with the case 15 to the bottom and to cool the unit battery cells 100.

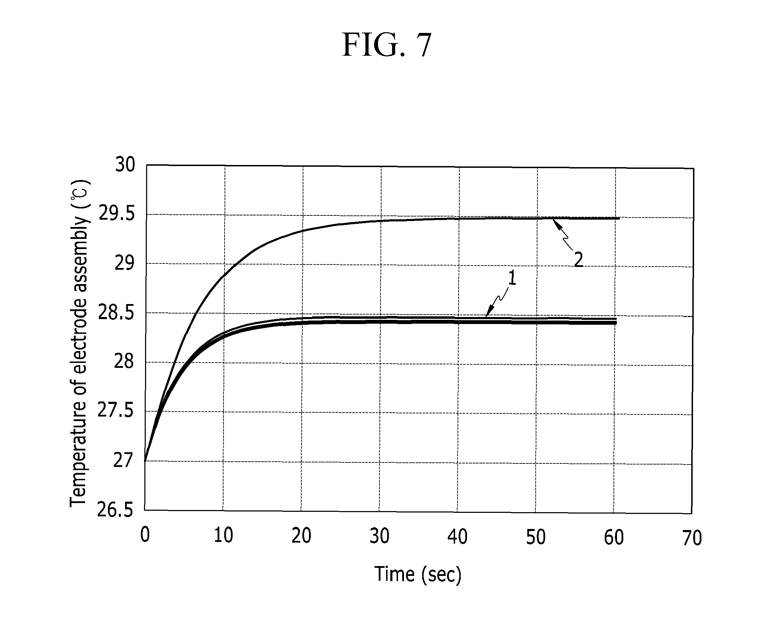

FIG. 7 illustrates a graph showing the relationship between operation time and the temperature of the electrode assembly of a rechargeable battery pack according to this exemplary embodiment.

Referring to FIG. 7, when a rechargeable battery pack 1 according to this exemplary embodiment and a rechargeable battery pack 2 according to a comparative example are operated under the same conditions, the rechargeable battery pack 1 according to the exemplary embodiment may control and maintain the temperature of the electrode assembly 10 at lower levels than the rechargeable battery pack 1 according to the comparative example.

As the temperature of a unit battery cell 100 decreases, the performance, battery life, and safety of the unit battery cell 100 may be improved.

By way of summation and review, a rechargeable battery may deteriorate when maintained at above an appropriate temperature. Accordingly, it is desirable to maintain a rechargeable battery at an appropriate temperature. For example, heat release performance can be improved by increasing the area of contact between an electrode assembly and a case. However, such a case may be difficult to manufacture the case, and the case may be easily deformed.

Embodiments provide a rechargeable battery and a rechargeable battery pack that provide a longer battery life and safety by improving the heat release performance of an electrode assembly. According to an embodiment, heat may be transferred from the electrode assembly to the bottom of the case through the thermal pad provided between the bottom of the case and the electrode assembly to transfer, thereby improving the heat release performance of the electrode assembly. According to an embodiment, the heat transferred to the bottom of the case through the thermal pad may be quickly released by the cooling unit provided under the unit battery cells.

Accordingly, the rechargeable battery and the rechargeable battery pack including the rechargeable battery as a unit battery cell may be improved in performance, battery life, and safety.

It is clear for a person skilled in the art that the disclosed embodiments can also be combined where possible.

## Claims

1. A rechargeable battery (100), comprising:
an electrode assembly (10) to charge and discharge current;
a case (15) accommodating the electrode assembly (10);
a cap plate (20) coupled to the case (15);
electrode terminals (21, 22) on the cap plate (20), the electrode terminals (21, 22) being electrically connected to the electrode assembly (10); and
a thermal pad (65) between a bottom of the case (15) and the electrode assembly (10).

2. The rechargeable battery as claimed in claim 1, wherein
the thermal pad (65) includes a pouch (651) corresponding in size to the bottom of the case (15) and thermal grease (652) contained in the pouch (651).

3. The rechargeable battery as claimed in claim 1 or 2, wherein one surface of the thermal pad (65) is configured to be in contact with the bottom of the case (15), and another surface of the thermal pad (65) is configured to be in contact with the electrode assembly (10).

4. The rechargeable battery as claimed in one of the preceding claims , wherein the area of the thermal pad (65) is equal to the bottom area (BA) of the case (15) and greater than the area (EA) of the electrode assembly (10) facing the bottom of the case (15).

5. The rechargeable battery as claimed in one of the preceding claims, wherein the pouch (651) includes thermal conductive material.

6. The rechargeable battery as claimed in one of the preceding claims, wherein the pouch (651) is configured to be deformed according to a shape of a space defined between the electrode assembly (10) and the bottom of the case (15).

7. A rechargeable battery pack (1), comprising:
a plurality of unit battery cells (100), each including a case (15), an electrode assembly (10) inside the case (15), and a thermal pad (65) between a bottom of the case (15) and the electrode assembly (10);
bus bars (200) that electrically connect electrode terminals (21, 22) of the unit battery cells (100); and
a cooling unit (300) in contact with the case (15) of each of the unit battery cells (100).

8. The rechargeable battery pack as claimed in claim 7, wherein the cooling unit (300) is located under the unit battery cells (100) and is configured to come into contact with an outer surface of the bottom of the each case (15).

9. The rechargeable battery pack as claimed in claim 7 or 8, wherein
the cooling unit (300) includes a housing (310) in contact with the outer surface of a bottom of each case (15);
cell barriers (320) within the housing (310), the cell barriers (320) forming a path (P) to direct a heat transfer medium to flow; and
a circulation pump (330) that circulates the heat transfer medium through the path (P) between an inlet and outlet of the housing (310).

10. The rechargeable battery pack as claimed in claim 9, wherein the cell barriers (320) are configured to extend along a second direction crossing a first direction of the unit battery cells (100), the first direction being a direction between the electrode terminals (21, 22) of a single unit battery cell (100) of the unit battery cells.

11. The rechargeable battery pack as claimed in claim 10, wherein the cell barriers (320) are spaced apart from each other along the first direction, and ends of the cell barriers (320) along the second direction are configured to be connected to respective opposite inner walls of the housing (310) in an alternating fashion.

12. The rechargeable battery pack as claimed one of claims 9 to 11, wherein the circulation pump (330) is located outside the housing (300).
